# EUROPÄISCHE PATENTSCHRIFT

(11) **EP 0 666 930 B1**
(45) Veröffentlichungstag und Bekanntmachung des Hinweises auf die Patenterteilung: **02.04.1997**
(21) Anmeldenummer: 94924150.9
(22) Anmeldetag: 24.08.1994
(51) Int. Cl.: C21C 5/36, C21B 3/06, C04B 5/06, C04B 7/147

(54) **VERFAHREN ZUM HERSTELLEN VON STAHL UND HYDRAULISCH AKTIVEN BINDEMITTELN**
PROCESS FOR MAKING STEEL AND HYDRAULICALLY ACTIVE BINDERS
PROCEDE DE FABRICATION D'ACIER ET DE LIANTS HYDRAULIQUEMENT ACTIFS

(30) Priorität: 07.09.1993 AT 1802/93; 01.07.1994 AT 1309/94
(43) Veröffentlichungstag der Anmeldung: 16.08.1995
(73) Patentinhaber: "HOLDERBANK" Financière Glarus AG, 8750 Glarus (CH)
(72) Erfinder: EDLINGER, Alfred, CH-5400 Baden (CH)
(74) Vertreter: Haffner, Thomas M., Dr.
(86) Internationale Anmeldenummer: AT9400122
(87) Internationale Veröffentlichungsnummer: WO9507365

(56) Entgegenhaltungen:
- DE-A- 2 611 889
- GB-A- 2 199 025
- LU-A- 71 715
- US-A- 4 009 024
- US-A- 4 102 675
- STAHL UND EISEN., Bd.104, Nr.16, 13. August 1984, DUSSELDORF DE Seiten 774 - 778 PIRET ET AL. 'Verwertung von LD-Schlacke zur Erzeugung von Portlandzementklinker und Roheisen'

## Beschreibung

Die Erfindung bezieht sich auf ein Verfahren zum Herstellen von Stahl und hydraulisch aktiven Bindemitteln, wie z.B. Hochofenschlacke, Klinker od. dgl.

Bei der Stahlherstellung entsteht Stahlschlacke, welche einen relativ hohen Eisenoxidgehalt, bedingt durch den Frischeprozeß enthält. Übliche Stahlschlacke enthält MnO und FeO in einem Ausmaß, welches bis zu 33 Gew.% beträgt.

Während Hochofenschlacke sich durch günstige hydraulische Eigenschaften und durch einen wesentlich geringeren Eisenoxidgehalt auszeichnet und damit einer Verwertung als Baugrundstoff leichter zugeführt werden kann, bereitet die Entsorgung von Stahlwerksschlacken zunehmend Schwierigkeiten, da die Stahlwerksschlacke in der anfallenden Zusammensetzung, d.h. ohne nachträgliche metallurgische Bearbeitung, nicht ohne weiteres für Bauzwecke od. dgl. verwendbar ist. Es wurde bereits vorgeschlagen, Stahlwerksschlacken gemeinsam mit Hochofenschlacken zu granulieren und als Schüttungsmaterial im Straßenbau zu verwenden. Der relativ hohe CaO-Gehalt der Stahlwerksschlacke läßt aber auch hier nur den Einsatz von begrenzten Mengen an Stahlwerksschlacke zu.

Eine metallurgische Aufarbeitung der Stahlwerksschlacke, um zu einem höherwertigen Produkt zu gelangen, ist in der Regel mit hohem Energieverbrauch verbunden und dadurch nicht ohne weiteres wirtschaftlich.

Schlacken mit relativ hohem Eisenoxidgehalt fallen aber auch bei anderen metallurgischen Prozessen oder Verbrennungsverfahren an. Insbesondere ist es bekannt, daß Cu-Konverterschlacken häufig einen Eisenoxidgehalt von über 50 Gew.% aufweisen, und es sind auch Schlacken aus Müll bzw. Abfallverbrennungsanlagen bekannt, welche sich durch relativ hohen Eisenoxidgehalt auszeichnen.

Die Erfindung zielt nun darauf ab, Stahlwerksschlacken bzw. Schlacken mit relativ hohem Eisenoxidgehalt der eingangs genannten Art unmittelbar in einem Stahlwerk weiter aufzubereiten und in ein besser verwertbares Endprodukt, nämlich in hydraulisch aktive Bindemittel, umzuwandeln. Zur Lösung dieser Aufgabe besteht das erfindungsgemäße Verfahren darin, daß Roheisen durch Zusatz von Eisenoxide in einer Menge von über 5 Gew.% enthaltenden Schlacken, wie z. B. Stahlschlacken, Cu-Konverterschlacken nach einer Reaktion mit einem Bleibad oder oxidierten Schlacken aus Abfallverbrennungsanlagen, gefrischt wird. Bevorzügte Ausführungformen der Erfindung sind den Ansprüchen 2-14 zu entnehmen. Bei diesem Verfahren wird somit der hohe Eisenoxidgehalt der flüssigen Schlacken, wie z.B. der Stahlschlacke ausgenützt, um flüssiges Roheisen, welches einen relativ hohen Kohlenstoff- und Siliziumgehalt aufweist, zu frischen. Grundsätzlich setzt sich hiebei Eisenoxid mit Kohlenstoff bzw. Eisenkarbid zu Eisen und Kohlenmonoxid um, wohingegen das Eisenoxid der Schlacke gemeinsam mit dem Silizium des Roheisenbades zu Eisen und SiO₂ reagiert. Diese Reaktionen sind teilweise exotherm, sodaß eine hohes Maß an Wirtschaftlichkeit erzielt wird. Durch die Reduktion des Eisenoxidgehaltes in der Stahlschlacke wird eine von der ursprünglichen Schlackenanalyse abweichende Analyse erzielt, welche wesentlich günstigere hydraulische Eigenschaften zur Folge hat. Der Eisenoxidgehalt wird zur Oxidation des Roheisenbades ausgenützt, und es kann beispielsweise im Falle von Stahlschlacken eine Reduktion des Eisenoxidgehaltes auf unter ein Drittel des ursprünglichen Wertes erzielt werden, wodurch sich die Mengenanteile der anderen Komponenten der ursprünglichen Stahlschlacke in ihrem Anteil an der Gesamtschlacke erhöhen. Daraus resultiert eine neue Schlakkenanalyse, welche keineswegs mehr der ursprünglichen Stahlschlackenanalyse entspricht. Die neue Schlackenanalyse zeichnet sich durch wesentlich günstigeren hydraulischen Modul und einen relativ hohen Alitgehalt aus. Auch wenn das auf diese Weise erzielte Schlackenendprodukt, welches als Zementklinker bezeichnet werden kann, nicht einem genormten Portlandzementklinker entspricht, wird ein höchstwertiger Alitzementklinker erhalten, der als eine überaus günstige Basis für eine Mischung mit anderen hydraulischen oder latent hydraulischen Stoffen geeignet ist. Insbesondere eignet sich der auf diese Weise erhältiche Zementklinker für eine Mischung mit Puzzolanen, wobei eine besonders hohe 28-Tagefestigkeit erzielt werden konnte.

Analoge Überlegungen, wie sie oben für Stahlschlacke angestellt wurden, gelten für Cu-Konverterschlacke bzw. andere Schlacken, wobei im Falle von Cu-Konverterschlacken naturgemäß darauf geachtet werden muß, daß Kupfer als Stahlschädling nicht in das Stahlbad gelangen darf. Kupfer muß daher zuvor über einem Bleibad abgeschieden werden, wobei das Kupfer vor dem Eisenbad aus der Schlacke entfernt wird. Das Blei selbst wird in der Folge in einer Eisenbadreaktion reduziert, wobei Eisen und Blei in einfacher Weise voneinander getrennt abgezogen werden können, da Eisen und Blei keine Lösung miteinander eingehen. Unterhalb des Eisen- bzw. Stahlbades bildet sich ein Bleisee aus, und es kann in diesen Fällen Stahl und Blei gesondert abgezogen werden.

Durch die Möglichkeit, neben einer simultanen Gewinnung bzw. Rückgewinnung der Metallfraktionen auch die verbleibende Schlakke in ein höherwertiges, wiederverwertbares Produkt umzuwandeln, ergibt sich ein wesentlicher wirtschaftlicher Vorteil und es können Schlacken entsorgt werden, für welche bisher keine sinnvolle Verwendung bestand. Um die gewünschte Oxidation des Kohlenstoffgehaltes im Roheisenbad und damit das Frischen zu Stahl zu ermöglichen, wird mit Vorteil so vorgegangen, daß der Eisenoxidgehalt der Schlacke über 8 Gew.%, vorzugsweise über 10 Gew.%, gewählt wird.

Wesentlich für die eingangs erwähnten grundsätzlichen Reaktionen, wie sie im Roheisenbad ablaufen, ist die Einhaltung relativ hoher Temperaturen. Trotz der zumindest teilweise exothermen Reaktion kann durch Wärmeverluste die erforderliche Temperatur absinken, wobei die Verlustwärme in besonders einfacher Weise über Badelektroden wiederum eingebracht werden kann. Das Schmelzbad kann aufgrund seiner chemischen Zusammensetzung in besonders einfacher Weise als elektrischer Widerstand, und das Roheisenbad als Gegenelektrode verwendet werden. In allen Fällen ist es für eine besonders wirtschaftliche Durchführung des erfindungsgemäßen Verfahrens und vor allen Dingen, um die gewünschten Reaktionen in einer annehmbaren Zeit zu Ende zu führen, erforderlich, daß die flüssige Stahlschlacke bei Temperaturen von über 1550° C, insbesondere 1600° C, und flüssiges Roheisen bei Temperaturen von 1450 bis 1550° C eingesetzt wird, wobei mit Vorteil so vorgegangen wird, daß die flüssigen Phasen gemeinsam 3 bis 8 Stunden, insbesondere etwa 6 Stunden bei Temperaturen über 1550° C, insbesondere 1660° C bis 1800° C, gehalten werden. Die Obergrenze von 1800° C wird hiebei mit Rücksicht auf die Alit-Stabilitätsobergrenze gewählt. Das als Reduktionsmittel zum Einsatz kommende Roheisen muß auf mindestens 1350° C überhitzt werden, um die Alitbildung überhaupt zu ermöglichen. Die bevorzugte Verfahrensführung sieht hiebei vor, die flüssige Stahlschlacke bei Temperaturen von über 1550° C einzusetzen, um hier optimale Phasenausbildung für die Weiterverwendung der Schlacken zu gewährleisten.

Durch die Reduktion des Eisenbades wird der Eisenoxidgehalt der Schlacke beispielsweise auf etwa 5 Gew.% gesenkt, wobei das Verfahren mit Vorteil so geführt wird, daß die Schlacke in eine Sinterphase übergeführt wird, welche aus 15 bis 25 Gew.% Schmelzphase (Aluminate, Ferrite) und Klinkerphase (Minerale, Alit, Belit) besteht.

Die geforderte Überhitzung, welche teilweise aus den exothermen Reaktionen der Schlacke mit dem Roheisenbad resultiert, kann durch externe Beheizung vorgenommen werden, wobei mit Vorteil so vorgegangen wird, daß als Mischgefäß ein elektrisch beheizbarer Kipp-Konverter eingesetzt wird. Eine weitere Möglichkeit, neben einem relativ hohen Eisenoxidgehalt in der Schlacke auch die entsprechende Temperatur zu gewährleisten, besteht darin, daß die Schlacken durch Einblasen oder Aufblasen von Sauerstoff auf Überhitzungstemperatur gehalten werden. Insbesondere dann, wenn die Schlacke durch Aufblasen von Sauerstoff auf Überhitzungstemperatur gehalten werden soll, wird mit Vorteil so vorgegangen, daß die Schlackenbadhöhe für die Reaktion mit Roheisen zwischen 2 und 8 cm, vorzugsweise 2 bis 6 cm, gewählt wird, wodurch sichergestellt wird, daß lediglich die Schlacke, nicht aber das darunter liegende Eisenbad mit Sauerstoff gefrischt wird.

Die Sinterphase schwimmt auf dem Eisenbad auf, wobei reduzierte Eisentröpfchen aus der Schlacken- bzw. Sinterphase in das Eisenbad sedimentieren. Da ein hoher Sedimentationswiderstand in der Sinterphase besteht, ist es wiederum vorteilhaft, wie bereits oben angegeben, die Schlacken- bzw. Sinterphasendicke auf 2 bis 6 cm zu beschränken, wodurch sich bei Verweilzeiten zwischen 3 und 8 Stunden metallisches Eisen nahezu vollständig aus der Schlacke entfernen läßt.

Eine weitere Möglichkeit, die gewünschten Schlackenparameter einzustellen, besteht darin, daß den Schlacken basische Schwacherze zur Anhebung des Eisenoxidgehaltes auf über 8 Gew.% zugesetzt werden. Bevorzugt werden auch CaCO₃, Al₂O₃ und/oder SiO₂ als Additive eingesetzt. Insbesondere bei der Verwendung derartiger weiterer Additive kann die Prozeßabwärme, und zwar sowohl die fühlbare als auch die chemische Wärme, zur Vorwärmung dieser Stoffe herangezogen werden.

Neben der Rückgewinnung von Kupfer mittels des Bleibades besteht naturgemäß auch die Möglichkeit der Rückgewinnung von Zink, wobei hier mit Vorteil so vorgegangen wird, daß bei Einsatz von Cu-Konverterschlacken Blei unterhalb des Stahlbades abgezogen wird und Zn aus der Gasphase kondensiert wird.

Für die Ergänzung der Verlustwärme wird mit Vorteil so vorgegangen, daß als Mischgefäß ein elektrisch beheizbarer Kipp-Konverter eingesetzt wird.

Der Eisenoxidgehalt der Schlacke vermindert sich entsprechend dem Mengenverhältnis Schlacke zu Roheisen, wobei naturgemäß immer nur Gleichgewichtsreaktionen erzielt werden, sodaß eine vollständige Umsetzung des Eisenoxidgehaltes nicht ohne weiteres denkbar ist. Eine besonders wirtschaftliche und effiziente Verfahrensweise ergibt sich dann, wenn flüssiges Roheisen der flüssigen Schlackenphase in Gewichtsmengen von 1 zu 2 bis 1 zu 3 zugesetzt wird.

Der gesinterte Zementklinker kann in üblicher Technologie weiterverarbeitet werden. Mit Vorteil wird die reduzierte Schlacke einer Klinkerkühl- und Granuliervorrichtung zugeführt, wobei in besonders einfacher Weise der Klinker mit Luft im Direktverfahren gekühlt wird.

Auch das gefrischte flüssige Roheisen, welches bereits weitgehend einer Stahlzusammensetzung entspricht, kann anschließend nach bekannten Stahlnachbehandlungsverfahren weiterverarbeitet werden.

Die Erfindung wird nachfolgend anhand von Ausführungsbeispielen näher erläutert.

### Beispiel 1:

Einem Teil Stahlschlacke wurde 0,5 Gewichtsteile flüssiges Roheisen zugesetzt, wobei die beiden Phasen gemeinsam 6 Stunden bei 1660° C gehalten wurden. Bei der Umsetzung entwickelten sich je kg Stahlschlackenschmelze 35 g Kohlenmonoxid, entsprechend 28 Normlitern. Die Stahlschlacke wies folgende Analyse auf:

| | |
|---|---|
| SiO₂ | 8 |
| Al₂O₃ | 7 |
| CaO | 45 |
| MgO | 5 |
| MnO + Fe0 | 30,5 |
| TiO₂ | 1 |

Das Roheisen wies nachfolgende Analyse auf:

| | |
|---|---|
| Si | 4 |
| C | 5 |
| Fe | 91 |

Nach sechsstündiger Reaktion veränderten sich die Schlackenanalyse und die Stahlanalyse im nachfolgenden Sinne:

| Schlackenanalyse (%) | |
|---|---|
| SiO₂ | 13 |
| Al₂O₃ | 8,9 |
| CaO | 60 |
| MgO | 6,4 |
| MnO + FeO | 10,5 |
| TiO₂ | 1,3 |

| Stahlanalyse (%) | |
|---|---|
| Si | 0 |
| C | 2 |
| Fe | 97 |

Bei der Bewertung der Schlacke, welche als Zementklinker zum Einsatz gelangte, erfolgte eine übliche zementtechnologische Bewertung, welche folgende Werte ergab. In der nachfolgenden Tabelle sind auch die typischen Bereiche für Portlandklinker zum Vergleich angeführt.

| Kriterium | Wert | typischer Bereich (Portland-Klinker) |
|---|---|---|
| Hydraulischer Modul | 1,85 | 1,7 - 2,3 |
| Silikatmodul | 0,67 | 1,8 - 3,2 |
| Kieselsäuremodul | 1,46 | 2,5 - 3,5 |
| Tonerdemodul | 0,85 | 1,5 - 2,5 |
| Kalkstandard | 1,12 | 0,8 - 0,95 |
| Alitgehalt (C₃S) | 70,7 | |

Insgesamt wurde ein höchstwertiger Alitzementklinker erhalten. Die 28-Tagefestigkeit nach DIN 1164 betrug 62 N/mm², was als extrem hoch eingestuft werden kann. Es handelt sich allerdings nicht um einen genormten Portlandzementklinker, wobei dann, wenn ein der Norm entsprechender Portlandzementklinker erwünscht wird, eine weitergehende Reduktion des Eisenoxides und eine geringe Zugabe von Additiven, wie beispielsweise von Tonen zur Anhebung der SiO₂- und Al₂O₃-Gehalte möglich wäre.

### Beispiel 2:

Zur Umsetzung der in Beispiel 1 bereits angeführten Stahlschlakke in eine Zielschlacke, welche als Hochofenschlacke bezeichnet werden könnte und nachfolgende Zusammensetzung aufweisen soll:

| % | Zielschlacke |
|---|---|
| SiO₂ | 36,5 |
| Al₂O₃ | 8,5 |
| CaO | 48 |
| MgO | 5,5 |
| MnO + FeO | 0 |
| TiO₂ | 1,5 |

wird die ursprüngliche Stahlschlacke zur Zielschlacke reduziert. Je kg Stahlschlacke wird 733 g Roheisen benötigt, wobei 950 g Stahl gebildet wird und 60 g C0 bzw. 48 Normliter CO freigesetzt werden. Zusätzlich wurden zur Herstellung der oben genannten Zielschlacke 225 g Quarzsand zugesetzt. Die Roheisen-und Stahlzusammensetzung ist in der nachfolgenden Tabelle angegeben:

| % | Roheisen | Stahl |
|---|---|---|
| Si | 4 | 0 |
| C | 5 | 1,5 |
| Fe | 91 | 98 |

Die Schmelztemperatur betrug etwa 1600° C, und es wurde eine Redoxzeit von ungefähr 4,5 Stunden eingehalten. Die gebildete Hochofenschlacke ist als hydraulisch aktives Bindemittel ausgezeichnet verwendbar. Die diesbezüglichen Kenndaten wurden wie folgt bestimmt:
Hydraulischer Index (Keil) = 92 % (sehr gut)
Puzzolanität (ASTM C 618) = 118 (ausgezeichnet)

### Beispiel 3:

Unter Verwendung von Cu-Schlacke aus einem Konverter wurde eine Ausgangsschlacke mit folgender chemischer Analyse eingesetzt:

| Hauptkomponente | Anteil (%) | Nebenkomponente | Anteil (%) |
|---|---|---|---|
| SiO₂ | 28 | S0₃ | 0,5 |
| Al₂O₃ | 6 | K₂0 | 0,13 |
| Fe₂O₃ | 53 | Na₂0 | 0,64 |
| CaO | 8 | Ti0₂ | 0,36 |
| MgO | 2 | Cr₂0₃ | 1,4 |
| | | Mn₂O₃ | 0,35 |
| | | P₂O₅ | 0,27 |
| | | Cl + F | 1 |

| Buntmetall | Anteil (ppm) |
|---|---|
| Cu | 11'000 |
| Pb | 6'800 |
| Zn | 3'760 |

Bedingt durch den hohen Schlackenkupfergehalt wurde unter Vorschaltung eines Bleibades Kupfer vor dem Eisenbad aus der Schlacke entfernt. In der Folge wurde Blei reduziert, wobei Eisen und Blei miteinander keine Lösung eingehen, sodaß sich unterhalb des Eisen- bzw. Stahlbades ein Bleisee ausbildete. Stahl und Blei konnten gesondert abgezogen werden.

Der relativ hohe Schlackenzinkanteil wurde über dem Eisenbad reduziert und in der Dampfphase kondensiert.

Die verbleibende Schwermetallkonzentration lag im Bereich von Zementklinkerrohmaterial. Nach der Reduktion der Schlacke mit Hilfe des im Eisenbad gelösten Kohlenstoffes ergab sich folgende Schlackenanalyse:

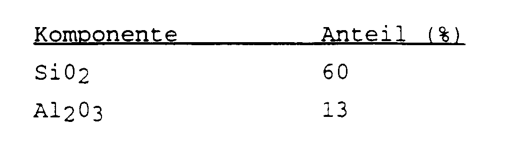

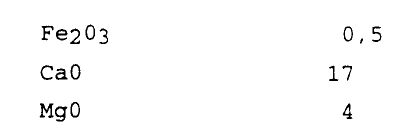

Die Schlacke wurde im Wasserbad gekühlt und wies hervorragende puzzolanische Eigenschaften auf. Gleichzeitig mit der Rückgewinnung der Metallfraktion Zink aus der Gasphase durch Kondensation und der Rückgewinnung von Kupfer sowie der Rückgewinnung des Bleibades ergab sich ein hyraulisch aktives Material, welches aufgrund seiner guten puzzolanischen Eigenschaften hohe Endfestigkeit, niedrige Hydratationswärme und hohe Chemikalienbeständigkeit aufwies.

### Beispiel 4:

Flüssiger, oxidierter Müllschlacke wurde mittels der in Beispiel 3 beschriebenen Redoxreaktion bei einer Reaktionsdauer von 3.5 Stunden und einer Schmelztemperatur von 1500°C Kupfer entzogen.

Die Ausgangsschlacke wies folgende Analyse auf:

| Komponente | Anteil (%) | Buntmetalle | Anteil (%) |
|---|---|---|---|
| SiO₂ | 42 | Cu | 1.2 |
| Al₂O₃ | 8 | Pb | 0.25 |
| Fe₂O₃ | 28 | Zn | 0.3 |
| CaO | 11 | Sn | 0.1 |
| MgO | 2 | Ni | 0.1 |
| K₂O | 1 | | |
| Na₂O | 3 | | |
| TiO₂ | 1 | | |
| P₂O₅ | 0.1 | | |

Bei einer Kupfer-Aktivität im Bleibad von 30-40 % und einer Schlackenschichthöhe von 3.5 cm betrug die Gleichgewichtskonzentration von Kupfer in der Schlacke 200 ppm.

Aus der entkupferten Flüssigkeitsschlacke wurden anschließend die restlichen Schwermetalle Blei, Zink, Zinn, Nickel und Eisen reduziert und abgeschieden.

Trennung der beiden Metallphasen Eisen/Blei gewährleistete die Rückgewinnung von hochwertigem, praktisch Kupfer freien Roheisen, mit folgenden Analysedaten:

| Buntmetall | Anteil (%) |
|---|---|
| Ni | 0.34 |
| Sn | 0.13 |
| Cu | 0.07 |

Kühlung, Granulation und Mahlen der schwermetallangereicherten Flüssigkeitsschlacke ergab das Schlackenprodukt "Puzzolan", das folgende Analyse aufwies:

| Komponente | Anteil (%) |
|---|---|
| SiO₂ | 59 |
| Al₂O₃ | 12 |
| Fe₂O₃ | 0.5 |
| CaO | 16 |
| MgO | 2.5 |
| K₂O | 1.5 |
| Na₂O | 4.5 |
| TiO₂ | 1.5 |
| P₂O₅ | 0.2 |

Durch den relativ hohen Al₂O₃-Gehalt weist der Puzzolan-Zement eine hohe Frühfestigkeit auf. Sein Keil-Index liegt bei 95%.

Insgesamt lassen sich durch Zugabe von Si0₂ und gegebenenfalls Al₂0₃-Trägern wie Tonen, Quarzsand und Bauxit optimierte Hochofenschlacken herstellen, wobei gleichzeitig die Schmelzviskosität erheblich vermindert wird. Bei der Reduktion derartiger Schmelzen lassen sich Stahltröpfchen leichter durch Sedimentieren abschalten, sodaß der freie Eisengehalt im hydraulischen Bindemittel wesentlich herabgesetzt werden kann.

Das erfindungsgemäße Verfahren kann in einfacher Weise in einem Stahlwerk vorgenommen werden. Unter der Annahme eines stündlichen Schlackenanfalles von etwa 15 t müßte ein Konverter mit etwa 125 t aktivem Gewicht, bzw. 35 m³ aktivem Volumen eingesetzt werden, um jeweils 90 t Stahlschlacke bzw etwa 30 m³ mit ungefähr 34 t Roheisen (etwa 5 m³) vermischen zu können. Die Klinkerphase wird getrennt vom Stahl abgezogen und in ein Mischgefäß abgestochen, wo die Fertigstellung erfolgt. In diesem Mischgefäß kann beispielsweise durch die Zugabe von Additiven, wie beispielsweise von Tonen, und weitere Reduktion eine Veredelung zu Portlandzementklinker erfolgen. Im übrigen kann aber in einem derartigen Mischgefäß in erster Linie ein Ausgleich von Schlackenfluktuationen erfolgen.

Die Klinkerkühl- und Granuliervorrichtung kann mit Luft im Direktverfahren gekühlt werden. In solchen Fällen wird Luft bei Temperaturen von 20° C auf etwa 1100° C erwärmt, und der Klinker von etwa 1600° C auf 250° C abgekühlt.

Die gebildete Menge C0 stellt eine weitere Energiequelle dar. Das C0 fällt bei Temperaturen von etwa 1600° C an und beinhaltet somit neben der latenten chemischen thermischen Energie auch fühlbare Wärme. Wenn bei entsprechend gut isoliertem metallurgischem Behälter mit einem Wärmeverlust von maximal 30 % gerechnet wird, bedeutet dies, daß das erfindungsgemäße Verfahren zur Herstellung vom Stahl und Klinker exotherm betrieben werden könnte, wenn die gebildeten brennbaren Gase optimal verwertet werden können.

Durch das erfindungsgemäße Verfahren läßt sich in besonders einfacher Weise eine schwer weiterverwertbare Stahlschlacke zu Erzzementklinker umwandeln, wobei gleichzeitig Frischarbeit geleistet wird. Der erfindungsgemäße Prozeß erlaubt es weiters, große, in konventionellen Prozessen nicht ohne weiteres verwertbare Wärmemengen auszunutzen, und auf diese Weise auch die Emission an Gasen, insbesondere C0₂, herabzusetzen.

Im Rahmen des erfindungsgemäßen Verfahrens finden die entscheidenden Reaktionen jeweils an den Grenzflächen der Schmelzen statt und das Verfahren kann in einem Sinterofen durchgeführt werden. Das aus der Grenzfläche ausgasende Kohenmonoxid reduziert gelöstes Eisenoxid in der Schlackenbadschicht, wobei naturgemäß der C0₂-Anteil des Reduktionsgases in der Schlackenschicht ansteigt. Ab einem Volumsanteil von etwa 15 Vol.% C0₂ verliert das Gas seine Reduktionswirkung, wobei jedoch immer noch zumindest teilweise eine weitere energetische Verwendung möglich ist, da derartige Gase oberhalb der Schlackenschicht mit Luftzug bzw. Sauerstoff oder Luft-Sauerstoffgemischen verbrannt werden können. Die Wärmeübertragung auf die Schlacken- und Eisenphase erfolgt hiebei praktisch ausschließlich über Strahlungsvorgänge.

Die entstehende Abwärme kann, wie bereits erwähnt, zur Vorwärmung von Additiven herangezogen werden, wobei die aufschwemmende Sinterphase getrennt abgezogen werden kann. Die erfindungsgemäße Temperaturführung ist auf den Stabilitätsbereich von Alit gestellt, woraus sich die eingangs geforderte Überhitzung ergibt. Der gebildete Alitsinter kann mit üblicher Klinkerkühltechnik zu Alitklinker eingefroren werden, wobei das Hauptziel dabei die Minimierung des Freikalkgehaltes sein muß.

Ein ggf. gewünschter Kohlenstoffeintrag zur Regulierung der Roheisenschmelztemperatur und des Reduktionspotentiales kann durch Sättigung mit Kohlenstoff im Bad beispielsweise über Eintauchlanzen od. dgl. erfolgen. Der Kohlenstoffeintrag kann im Gegenstrom oder im Gleichstrom an mehreren Orten vorgenommen werden. Das Eisenbad erfüllt hiebei nicht nur die Aufgabe des Reduktionsmittelträgers sondern auch die Aufgabe eines Fördermediums für die Schlacken- bzw. Sinterphasen, wobei besonders einfache Ofenkonstruktionen Verwendung finden können.

## Patentansprüche

1. Verfahren zum Herstellen von Stahl und hydraulisch aktiven Bindemitteln aus Schlacken, dadurch gekennzeichnet, daß Roheisen durch Zusatz von Eisenoxide in einer Menge von über 5 Gew.% enthaltenden Schlacken, wie z. B. Stahlschlacken, Cu-Konverterschlacken nach einer Reaktion mit einem Bleibad oder oxidierten Schlacken aus Abfallverbrennungsanlagen, gefrischt wird.

2. Verfahren nach Anspruch 1, dadurch gekennzeichnet, daß der Eisenoxidgehalt der Schlacke über 8 Gew.%, vorzugsweise über 10 Gew.%, gewählt wird.

3. Verfahren nach Anspruch 1 oder 2, dadurch gekennzeichnet, daß flüssige Stahlschlacke bei Temperaturen von über 1550° C, insbesondere über 1600° C, und flüssiges Roheisen bei Temperaturen von 1450° C bis 1550° C eingesetzt wird.

4. Verfahren nach Anspruch 1, 2 oder 3, dadurch gekennzeichnet, daß flüssiges Roheisen der flüssigen Schlackenphase in Gewichtsmengen von 1 zu 2 bis 1 zu 3 zugesetzt wird.

5. Verfahren nach Anspruch 1 bis 4, dadurch gekennzeichnet, daß die flüssigen Phasen gemeinsam 3 bis 8 Stunden, insbesondere etwa 6 Stunden bei Temperaturen über 1550° C, insbesondere 1660° C bis 1800° C, gehalten werden.

6. Verfahren nach einem der Ansprüche 1 bis 5, dadurch gekennzeichnet, daß als Mischgefäß ein elektrisch beheizbarer Kipp-Konverter eingesetzt wird.

7. Verfahren nach einem der Ansprüche 1 bis 6, dadurch gekennzeichnet, daß die Schlacken durch Einblasen oder Aufblasen von Sauerstoff auf Überhitzungstemperatur gehalten werden.

8. Verfahren nach einem der Ansprüche 1 bis 7, dadurch gekennzeichnet, daß den Schlacken basische Schwacherze zur Anhebung des Eisenoxidgehaltes auf über 8 Gew.% zugesetzt werden.

9. Verfahren nach einem der Ansprüche 1 bis 8, dadurch gekennzeichnet, daß bei Einsatz von Cu-Konverterschlacken Blei unterhalb des Stahlbades abgezogen wird und Zn aus der Gasphase kondensiert wird.

10. Verfahren nach einem der Ansprüche 1 bis 9, dadurch gekennzeichnet, daß die Schlackenbadhöhe für die Reaktion mit Roheisen zwischen 2 und 8 cm, vorzugsweise 2 bis 6 cm, gewählt wird.

11. Verfahren nach einem der Ansprüche 1 bis 10, dadurch gekennzeichnet, daß die Schlacke in eine Sinterphase übergeführt wird, welche aus 15 bis 25 Gew.% Schmelzphase (Aluminate, Ferrite) und Klinkerphase (Minerale, Alit, Belit) besteht.

12. Verfahren nach einem der Ansprüche 1 bis 11, dadurch gekennzeichnet, daß CaC0₃, Al₂0₃ und/oder Si0₂ als Additive eingesetzt werden.

13. Verfahren nach einem der Ansprüche 1 bis 12, dadurch gekennzeichnet, daß die reduzierte Schlacke bzw Sinterphase einer Klinkerkühl- und Granuliervorrichtung zugeführt wird.

14. Verfahren nach einem der Ansprüche 1 bis 13, dadurch gekennzeichnet, daß der Klinker mit Luft im Direktverfahren gekühlt wird.

## Claims

1. A process for producing steel and hydraulically active binders from slags, characterized in that pig iron is refined by the addition of slags containing iron oxides in amounts exceeding 5 % by weight, such as, e.g., steel slags, Cu converter slags after reaction with a lead bath or oxidized slags derived from waste incineration plants.

2. A process according to claim 1, characterized in that the iron oxide content of the slag is chosen to exceed 8 % by weight, preferably 10 % by weight.

3. A process according to claim 1 or 2, characterized in that liquid steel slag at temperatures of above 1550°C, in particular above 1600°C, and liquid pig iron at temperatures ranging from 1450°C to 1550°C are used.

4. A process according to claim 1, 2 or 3, characterized in that liquid pig iron is added to the liquid slag phase in weight amounts ranging from 1 to 2 to 1 to 3.

5. A process according to claims 1 to 4, characterized in that the liquid phases together are maintained at temperatures of above 1550°C, in particular 1660°C to 1800°C, for 3 to 8 hours, in particular approximately 6 hours.

6. A process according to any one of claims 1 to 5, characterized in that an electrically heatable tiltable converter is used as a mixing vessel.

7. A process according to any one of claims 1 to 6, characterized in that the slags are maintained at superheating temperature by blowing in or top-blowing oxygen.

8. A process according to any one of claims 1 to 7, characterized in that basic weak ores are added to the slags to raise the iron oxide content to above 8 % by weight.

9. A process according to any one of claims 1 to 8, characterized in that, if Cu converter slags are used, lead is drawn off below the steel bath and Zn is condensed out of the gaseous phase.

10. A process according to any one of claims 1 to 9, characterized in that the slag bath height for the reaction with pig iron is chosen to be between 2 and 8 cm, preferably 2 to 6 cm.

11. A process according to any one of claims 1 to 10, characterized in that the slag is converted into a sinter phase comprised of 15 to 25 % by weight of melt phase (aluminates, ferrites) and clinker phase (minerals, alite, belite).

12. A process according to any one of claims 1 to 11, characterized in that CaCO₃, Al₂O₃ and/or SiO₂ are employed as additives.

13. A process according to any one of claims 1 to 12, characterized in that the reduced slag or sinter phase is supplied to a clinker cooling and granulating means.

14. A process according to any one of claims 1 to 13, characterized in that the clinker is cooled by air in the direct method.

## Revendications

1. Procédé de fabrication d'acier et de liants hydrauliquement actifs (liants hydrauliques) à partir de laitiers ou de scories, procédé caractérisé en ce qu'on affine du fer brut en lui ajoutant des laitiers ou scories contenant des oxydes de fer présents en une quantité supérieure à 5% en poids, par exemple des laitiers de fabrication d'acier, des laitiers de convertisseur de Cu après une réaction avec un bain de plomb ou des laitiers oxydés provenant d'installations d'incinération de déchets ou d'ordures.

2. Procédé selon la revendication 1, caractérisé en ce que la teneur en de l'oxyde de fer des laitiers est choisie à une valeur supérieure à 8% en poids, avantageusement supérieure à 10% en poids.

3. Procédé selon la revendication 1 ou 2, caractérisé en ce que l'on utilise des laitiers liquides de fabrication de l'acier, à des températures supérieures à 1 550°C, notamment supérieures à 1 600°C, et du fer brut liquide à des températures de 1 450°C à 1 550°C.

4. Procédé selon la revendication 1, 2 ou 3, caractérisé en ce qu'on ajoute du fer brut liquide à la phase liquide des laitiers, en des quantités pondérales de 1 pour 2 à 1 pour 3.

5. Procédé selon l'une des revendications 1 à 4, caractérisé en ce que l'on maintient les phases liquides ensemble durant 3 à 8 heures, notamment 6 heures environ, à des températures supérieures à 1 550°C, notamment entre 1 660°C et 1 800°C.

6. Procédé selon l'une des revendications 1 à 5, caractérisé en ce qu'on utilise comme mélangeur un convertisseur culbutant pouvant être chauffé électriquement.

7. Procédé selon l'une des revendications 1 à 6, caractérisé en ce qu'en insufflant ou en soufflant de l'oxygène, on maintient les laitiers à des températures de surchauffe.

8. Procédé selon l'une des revendications 1 à 7, caractérisé en ce qu'on ajoute aux laitiers des minerais pauvres basiques pour augmenter la teneur en de l'oxyde de fer et pour porter cette teneur à plus de 8% en poids.

9. Procédé selon l'une des revendications 1 à 8, caractérisé en ce que, lors de l'utilisation de laitiers de convertisseurs de cuivre, on soutire du plomb sous le bain d'acier et il se produit une séparation, par condensation, de Zn de l'atmosphère gazeuse.

10. Procédé selon l'une des revendications 1 à 9, caractérisé en ce qu'on choisit pour la réaction avec le fer brut la hauteur du bain de laitier à une valeur comprise entre 2 et 8 cm, avantageusement entre 2 et 6 cm.

11. Procédé selon l'une des revendications 1 à 10, caractérisé en ce qu'on transforme le laitier en une phase de frittage consistant en 15 à 25% en poids de phase fondue (aluminates, ferrites) et en une phase de klinker (matières minérales, alite, bélite).

12. Procédé selon l'une des revendications 1 à 11, caractérisé en ce qu'on utilise comme additifs CaCO₃, Al₂O₃ et/ou SiO₂.

13. Procédé selon l'une des revendications 1 à 12, caractérisé en ce que le laitier réduit ou la phase de frittage est dirigée vers un dispositif de refroidissement et de granulation du klinker.

14. Procédé selon l'une des revendications 1 à 13, caractérisé en ce qu'on refroidit le klinker avec de l'air utilisé dans un procédé direct.
